# EUROPÄISCHE PATENTSCHRIFT

(11) **EP 2 318 232 B1**
(45) Veröffentlichungstag und Bekanntmachung des Hinweises auf die Patenterteilung: **21.05.2014**
(21) Anmeldenummer: 09777552.2
(22) Anmeldetag: 30.07.2009
(51) Int. Cl.: B60N 2/70

(54) **POLSTERELEMENT, INSBESONDERE EIN SITZPOLSTERELEMENT ODER EIN KOPFSTÜTZENPOLSTERELEMENT UNTERSCHIEDLICHER HÄRTEZONEN ZUR VERWENDUNG IN EINEM KRAFTFAHRZEUG, VERFAHREN ZUR HERSTELLUNG EINES POLSTERELEMENTS UND FAHRZEUGSITZ BZW. KOPFSTÜTZE**
CUSHION ELEMENT, IN PARTICULAR A SEAT CUSHION ELEMENT OR A HEADREST CUSHION ELEMENT OF DIFFERENT HARDNESS ZONES FOR USE IN A MOTOR VEHICLE, METHOD FOR PRODUCING A CUSHION ELEMENT, AND VEHICLE SEAT OR HEADREST
ÉLÉMENT DE REMBOURRAGE, NOTAMMENT DE SIÈGE OU D'APPUIE-TÊTE, PRÉSENTANT DIFFÉRENTES ZONES DE DURETÉ ET DESTINÉ À UN VÉHICULE À MOTEUR, PROCÉDÉ DE FABRICATION D'UN ÉLÉMENT DE REMBOURRAGE, SIÈGE ET APPUIE-TÊTE DE VÉHICULE À MOTEUR

(30) Priorität: 31.07.2008 DE 102008035611
(43) Veröffentlichungstag der Anmeldung: 11.05.2011
(73) Patentinhaber: Johnson Controls GmbH, 51399 Burscheid (DE)
(72) Erfinder: JANZ, Michael, 32609 Hüllhorst (DE); WEINGÄRTNER, Andreas, 32351 Stemwede (DE); KLUSMEIER, Werner, 32312 Lübbecke (DE)
(74) Vertreter: Schwöbel, Thilo K.
(86) Internationale Anmeldenummer: PCT/EP2009/005530
(87) Internationale Veröffentlichungsnummer: WO 2010/012469

(56) Entgegenhaltungen:
- EP-A1- 1 806 258
- WO-A1-96/02693
- WO-A1-2004/095986
- WO-A1-2006/105874
- DE-A1- 19 719 532
- DE-C1- 19 628 698
- FR-A1- 2 882 308
- US-A- 5 544 942
- US-B1- 6 481 801

## Beschreibung

Die Erfindung betrifft ein Polsterelement, insbesondere ein Sitzpolsterelement oder ein Kopfstützenpolsterelement bzw. eine Kopfstütze zur Verwendung in einem Kraftfahrzeug ferner ein Verfahren zur Herstellung eines Polsterelements, sowie eine Kopfstütze bzw. einen Fahrzeugsitz, insbesondere für ein Kraftfahrzeug, umfassend ein Sitzteil und ein Lehnenteil mit einer die Trägerstruktur aus Metall oder Kunststoff überdeckenden Polsterung, die der Erhöhung des Sitzkomforts dient.

Auf dem Gebiet der Herstellung von Polsterelementen, insbesondere für Kraftfahrzeugsitze, ist es bekannt, dass der überwiegende Teil der Rückenlehnen bzw. Sitzflächen von Fahrzeugsitzen zunehmend aus Schaumteilen wie zum Beispiel aus Polyurethan-Weichschaum hergestellt ist und anschließend mit Bezügen aus Leder, Textilien oder dgl. bezogen ist. Ferner ist bekannt, dass ein kleinerer Teil der Sitze- und Lehnen-Polster besonders in der Automobilindustrie aus latexierten Kokosfasern hergestellt wird. Der Grund für dieses Anwendungsgebiet liegt darin, dass Fasern in Polsterauflagen ein besseres Mikroklima aufweisen, besser durchlüftet werden und somit einen besseren Komfort bieten. Bei einem bekannten Herstellverfahren der Polsterauflagen aus Faserverbundwerkstoffen wird an ein Lochwerkzeug, in dem sich ein luftdurchlässiges Vlies befindet, ein Vakuum bzw. Unterdruck angelegt. In dieses Werkzeug werden Fasern mit Bindemittel (z.B. Latex) gestreut. Anschließend werden die Polsterauflagen in dem Werkzeug getrocknet. In den nachfolgenden Arbeitsschritten wird die Polsterauflage gestanzt, vulkanisiert und beschliffen. In einigen Anwendungsbereichen werden hierbei die sehr festen und steifen Polsterteile aus einem Faserverbund hergestellt (wie z.B. mit Kokosfasern und Latex), der teilweise als Montageträger dient, um Lüfter, Massageeinheiten und andere Bauteile aufzunehmen und zu befestigen. Dieses ist im Weichschaum nur mit zusätzlichen Verstärkungseinheiten/Bauelementen möglich.

Bei der Herstellung von solchen Faserverbünden ist zwar bekannt, dass geringfügige unterschiedliche Härten in den Polstern dargestellt werden können, indem unterschiedliche Eintragsmengen von Fasern in das Werkzeug eingebracht werden, wodurch leichte Härteunterschiede erreicht werden können, vgl. etwa die Druckschrift DE 695 04 987 T2.
Jedoch ist es zum Erreichen großer Härteunterschiede, wie zum Beispiel zur Erzielung eines sehr weichen Ansitzverhaltens zur Komfortverbesserung, notwendig, dass der Faserverbundwerkstoff / das Polsterteil mit sehr weichem Schnittschaum kaschiert wird. Dieses ist ein sehr teures und kostenintensives Verfahren, da es in der Regel mit Hand durchgeführt werden muss.

Bei der Herstellung von Kopfstützen ist es bekannt, dass ein konturgebender, festigkeitsgebender Teil aus einem Spritzgusselement hergestellt werden kann. Diese Spritzgusselemente können zusätzlich die Kopfstützenstangenmechanik aufweisen bzw. mit ihr verbunden sein.
Die DE 197 19532 zeigt ein Polsterelement gemäß dem Oberbegriff des Anspruchs 1. Aufgabe der Erfindung ist es daher, ein Polsterelement und ein Verfahren zu dessen Herstellung anzugeben, das die genannten Nachteile vermeidet und insbesondere die Wirtschaftlichkeit der Herstellung von horizontalen wie vertikalen Härteeinstellungen des Faserverbundwerkstoffes verbessert.

Diese Aufgabe wird erfindungsgemäß durch ein Polsterelement mit den Merkmalen des Anspruchs 1. Durch die erfindungsgemäße Integration des Einlegens sehr offener Vliese oder technischer Textilien in den Fertigungsprozess zur Herstellung von Faserverbünden, können aktive oder passiv belüftete Polsterauflagen wesentlich kostengünstiger hergestellt werden als durch konventionelles Verkleben. Das Einlegematerial wird in einem Formwerkzeug eingebracht, nach dem die Vlieslage im Formwerkzeug plaziert wurde. Ferner wird in das Formwerkzeug das Ausgangsmaterial für den Faserverbundwerkstoff eingebracht. Durch den anschließenden Formungsprozess kommmt es zur Ausbildung eines einstückigen Materialverbunds zwischen der Vlieslage, dem Einlegematerial und dem Faserverbundwerkstoff. Hierdurch können (insbesondere hinsichtlich ihrer geometrischen Maße) hochgenaue Formgebungsprozesse der Ausgangsmaterialien auf ein Minimum reduziert werden und so die Herstellungskosten auf reduziert werden. Der stabile gestreute Grundkörper der Verbundfaser (d.h. des Faserverbundwerkstoffes) bleibt nach dem Abschluss der Formgebung erhalten, so dass eine gute Konturtreue des Polsterteils erhalten bleibt, was unerlässlich beim Beziehen mit Textilien, Leder oder Folie ist. Es ist somit erfindungsgemäß vorteilhaft möglich, dass durch die Verwendung des Einlegermaterials und durch die gestreute Einbringung des Ausgangsmaterials des Faserverbundwerkstoffes gleichzeitig die Klimaeigenschaften, unterschiedliche Härtebereiche und die Luftzuführung in einem Prozessschritt bei der Herstellung integriert werden können. Außerdem wird hierdurch in vorteilhafter Weise auch die Möglichkeit bereitgestellt, ein solches Polsterelement kostengünstig zu recyclen (wiederzuverwenden), etwa weil kein zusätzlicher (insbesondere hinsichtlich seiner chemischen Natur gegenüber dem bei der Herstellung des Faserverbunds benutzten Bindemittel) Kleber verwendet werden muss.

Erfindungsgemäß ist ferner bevorzugt, dass das Einlegematerial ein Vliesmaterial oder eine Matte ist, wobei das Vliesmaterial oder die Matte natürliche oder synthetische Fasern aufweist. Hierdurch ist eine große Vielzahl unterschiedlicher Materialien zur Erzeugung unterschiedlicher Komfortansprüche bzw. Anwendungsfälle mit dem erfindungsgemäßen Verfahren benutzbar, beispielsweise PES/PET (Polyethylenterephthalat)-Fasem.

Weiterhin ist erfindungsgemäß bevorzugt, dass das Einlegematerial lediglich über einen Teilbereich der Oberfläche des Polsterelements erstreckt vorgesehen ist. Erfindungsgemäß ist es hierdurch in vorteilhafter Weise möglich, dass in dem Polsterelement nicht alle Oberflächenzonen mit dem Einlegematerial belegt sind bzw. dass verschiedene Oberflächenzonen realisiert werden können, so dass der Benutzungskomfort bei einem sehr geringen Mehraufwand nochmals erhöht werden kann.

Weiterhin ist es erfindungsgemäß bevorzugt, wenn das Einlegematerial weicher als der Faserverbundwerkstoff ist. Hierdurch kann in einfacher Weise ein besonders weiches Ansitzverhalten des erfindungsgemäßen Polsterkörpers realisiert werden.

Erfindungsgemäß ist es ferner auch bevorzugt, dass das Bindemittel insbesondere Latex ist und die Fasern insbesondere Kokosfasern sind. Hierdurch ist es in besonders vorteilhafter Weise möglich, dass das erfindungsgemäße Polsterteil besonders gut geeignet sind für eine sehr gute aktive und passive Belüftung. Die Verwendung von unterschiedlich elastischen Bindemitteln - insbesondere die Verwendung von unterschiedlichen Arten von Latex - macht es erfindungsgemäß hierbei in vorteilhafter Weise möglich, dass Härteunterschiede im Polsterteil bzw. im Polsterelement erreicht werden können.

Erfindungsgemäß ist es weiterhin auch bevorzugt, dass das Einlegematerial ein technisch hergestelltes gewebtes oder gesponnenes Vlies ist. Hierdurch kann erfindungsgemäß in vorteilhafter Weise das Polsterelement besonders variabel und kostengünstig hergestellt werden.

Weiterhin ist Erfindungsgemäß bevorzugt, dass das Einlegematerial ein geringeres spezifisches Gewicht aufweist als der Faserverbundwerkstoff. Hierdurch kann in besonders einfacher und kostengünstiger Weise ein besonders leichtes Polsterelement realisiert werden.

Ein weiterer Gegenstand der vorliegenden Erfindung betrifft ein Verfahren gemäß Anspruch 7.

Erfindungsgemäß ist es ferner bevorzugt, dass das Bindemittel ein Latexwerkstoff ist und dass nach der Formung des Polsterelements im Formwerkzeug ein Vulkanisationsschritt erfolgt. Alternativ zur Durchführung eines Vulkanisationsschrittes kann auf diesen Vulkanisationsschritt auch verzichtet werden, falls ein Bindemittel aus Polyurethan-Dispersion oder Chloropren-Latex-Dispersion verwendet wird.

Ein weiterer Gegenstand der vorliegenden Erfindung betrifft eine Kopfstütze, insbesondere für ein Kraftfahrzeug, wobei die Kopfstütze ein erfindungsgemäßes Polsterelement aufweist.

Ein weiterer Gegenstand der vorliegenden Erfindung betrifft einen Fahrzeugsitz, insbesondere für ein Kraftfahrzeug, umfassend ein Sitzteil und ein Lehnenteil, wobei des Sitzteil und/oder das Lehnenteil ein erfindungsgemäßes Polsterelement aufweist.

Ausführungsformen der Erfindung sind in der Zeichnung dargestellt und in der nachfolgenden Beschreibung näher erläutert.
Figur 1 zeigt schematisch einen Fahrzeugsitz mit einem Sitzteil und einem Lehnenteil in Seitenansicht.
Figuren 2 und 3 zeigen schematisch jeweils eine Ausführungsform eines erfindungsgemäßen Polsterelements eines Fahrzeugsitzes, insbesondere entweder des Sitzteils oder des Lehnenteils, in einer schematischen Schnittdarstellung, wobei in der Figur 2 die Benutzerseite unten dargestellt ist und in der Figur 3 die Benutzerseite oben dargestellt ist.
Figuren 4 und 5 zeigen schematisch jeweils eine Ausführungsform einer Kopfstütze mit einem erfindungsgemäßen Polsterelement.

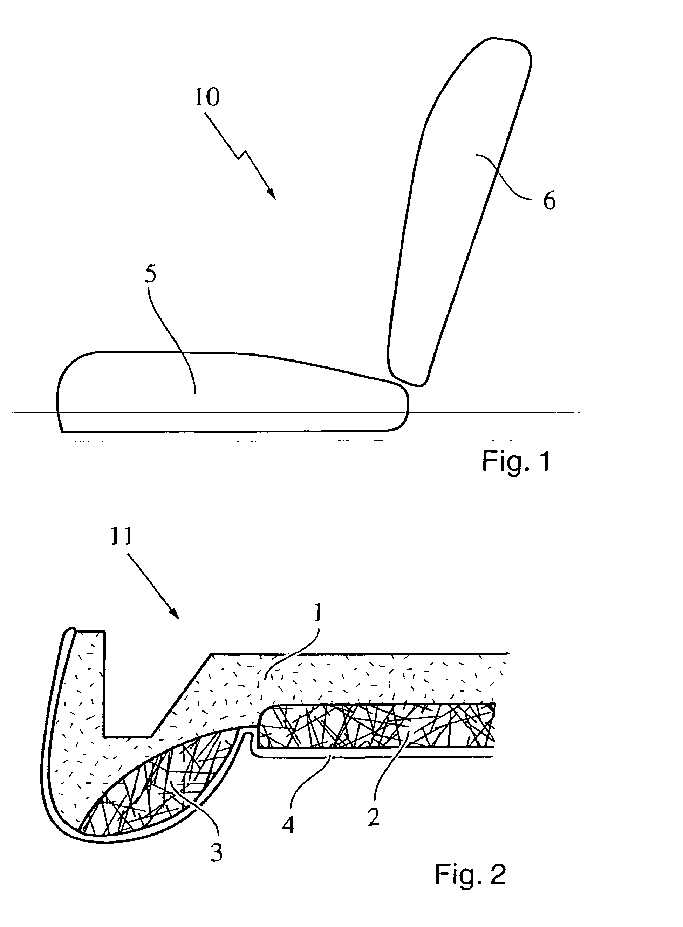

Die Figur 1 zeigt schematisch einen gattungsgemäßen Fahrzeugsitz 10 in einer Seitenansicht. Der Fahrzeugsitz 10 weist ein Sitzteil 5 und ein Lehnenteil 6 mit jeweils einem die Trägerstruktur des Sitz- oder Lehnenteils aus Metall oder Kunststoff überdeckenden Polsterung bzw. einem Polsterelement 11 auf, die der Erhöhung des Sitzkomforts dient.

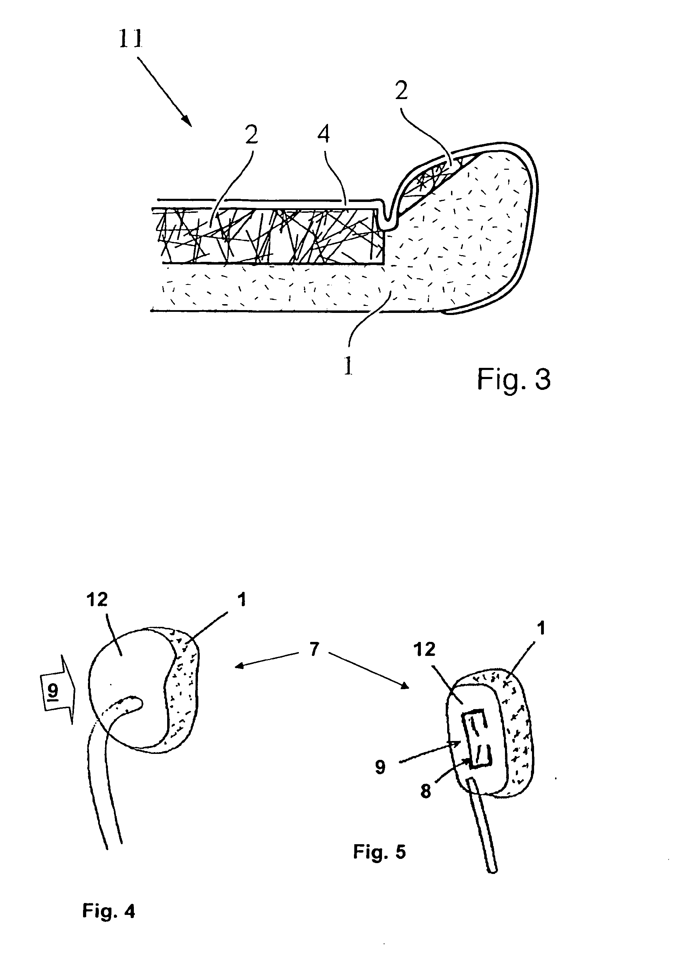

Figuren 2 und 3 stellen schematisch jeweils eine Ausführungsform eines erfindungsgemäßen Polsterelements 11 eines Fahrzeugsitzes 1 für das Sitz- bzw. das Lehnenteil 5, 6 in einer Schnittdarstellung dar. Das Polsterelement 11 weist einen Faserverbundwerkstoff 1 sowie eine Vlieslage 4 auf. Auf der dem Faserverbundwerkstoff 1 zugewandten Seite der Vlieslage 4 ist beim erfindungsgemäßen Polsterelement 11 ein Einlegematerial 2, 3 angeordnet.

In den Figuren 4 und 5 ist jeweils schematisch eine Ausführungsform einer Kopfstütze 7 mit einem erfindungsgemäßen Polsterelement und einem Formkörper 12 dargestellt Eine solche Kopfstütze 7 umfasst bevorzugt einen Faserverbundwerkstoff 1 und ferner unterschiedliche klimafähige (d.h. belüftungsfähige) Härtebereiche, die durch unterschiedlich weiche Einlegematerialien realisiert sind. Der Faserverbundwerkstoff umfasst-Fasern aus einer Basisfaser mit einer konturbestimmenden Festigkeit. Bei der Kopfstütze 7 sind Härtebereiche im Herstellungsprozess durch Einleger verschiedenster Eigenschaften einstellbar. Die Luftführung kann bis zum Klimateil durch Rohrführungen in eigenen Hohlräumen, durch einen eigenen Ventiator 8 (oder mehrere eigene Ventilatoren 8) im Verbund oder dessen Hohlraum oder auch durch Zentralventilatoren erreicht werden. Die Ventilatoren 8 erzeugen eine Luftströmung 9 zur Klimatisierung der Kopfstütze 7 bzw. generell des Polsterelements.

Zur Herstellung eines Polsterelements 11 ist es vorgesehen, dass Fasern 10 mit einem Bindemittel - insbesondere Latex - versehen werden und direkt durch einen Streukopf in Vorform-Aufnahmen bzw. in Werkzeuge gestreut werden. Als alternatives Bindemittel - anstelle von Latex - kommt Polyurethan/Polyurethan-Dispersion in Frage.

Die erfindungsgemäße Polsterauflage bzw. das erfindungsgemäße Polsterelement 11 aus dem Faserverbundwerkstoff 1 mit dem Einlegematerial 2, 3 weist den Vorteil auf, dass unterschiedliche Härtebereiche - insbesondere in den Komfortzonen - durch die verschieden weichen Fasereinleger 2, 3 bzw. das Einlegematerial 2, 3 entsteht. Der Grundkörper 1 bzw. der Faserverbundwerkstoff 1 umfasst hierbei insbesondere eine Basisfaser mit einer konturbestimmenden Festigkeit sowie ein Bindemittel. Bei der Auflage bzw. bei dem Einlegematerial 2, 3 ist es möglich, dass unterschiedliche Härtebereiche des Materials sowohl in einer Richtung im wesentlichen senkrecht zur späteren Oberfläche des Polsterelements 11 als auch in einer Richtung im wesentlichen parallel zur späteren Oberfläche des Polsterelements 11 realisiert werden. Die erste dieser Möglichkeiten (d.h. unterschiedliche Härten bei unterschiedlich starker Eindringtiefe ins Polsterelement 11 senkrecht zu dessen Oberfläche) wird nachfolgend auch als unterschiedliche Härtebereiche "horizontal" bezeichnet und mit dem mit dem Bezugszeichen 2 bezeichneten Einlegematerial verknüpft. Die zweite dieser Möglichkeiten (d.h. unterschiedliche Härten an unterschiedlichen Stellen des Polsterelements 11) wird nachfolgend auch als unterschiedliche Härtebereiche "vertikal" bezeichnet und mit dem mit dem Bezugszeichen 3 bezeichneten Einlegematerial verknüpft. Die Einlegematerialien 2, 3 haben insbesondere verschiedene Eigenschaften einstellbar, wodurch verschiedenste Konfigurationen des Polsterelements 11 realisierbar sind. Eine wirtschaftliche Herstellung des Faserverbundwerkstoffes für Polster wird erfindungsgemäß dadurch erreicht, dass der überwiegende Teil der Fasern mit einem Bindemittel (Klebemittel wie Latex) durch einen Streukopf robotergeführt in ein Werkzeug gestreut wird, die Härtebereiche durch Faservliese, natürlicher oder synthetischer Basis an den Stellen in das Werkzeug platziert werden, wo der Komfort unterschiedlicher Härte gebraucht wird. Ein fast nahtloser Übergang von Grundfasern synthetischer oder natürlicher Basis wird dadurch erreicht, dass die verwendeten Einleger mit dem gleichen elastischen Bindemittel im Prozess behandelt werden wie die Fasern im Grundkörper.

Die physikalischen und Komforteigenschaft des Einlegers und dessen Platzierung im Werkzeug beeinflussen die Härte und Komforteigenschaften des Polsterteils.

Die Erfindung bezieht sich auf ein Polsterteil mit beispielsweise synthetischen Fasern (PES, PET) und/oder natürlichen Fasern (z.B. Kokosfasern) gebunden mit flexiblen, duroplastischen Binder bzw. Bindemittel (z.B. Latex) oder dgl. insbesondere zur Verwendung als Auflage für Rückenlehnen, Sitzflächen oder dgl. von Fahrzeugsitzen mit einem Bereich aus konturgebenden synthetischen oder natürlichen Fasern und Einlegern mit wesentlich anderen z.B. weicheren Eigenschaften als die Grundfaser.

Gemäß der Erfindung werden während des Herstellungsprozesses des Polsterelements aus Faserverbundwerkstoffen weiche synthetische Vlieseinleger, Vliese oder Matten, d.h. das Einlegematerial 2, 3, aus weichen natürlichen Fasern beim Prozess in die Kavität des Werkzeuges eingelegt.

Der stabile gestreute Grundkörper 1 des Polsterelements 11 (insbesondere aus Faserverbundwerkstoff 1) bleibt erhalten, sodass weiterhin eine gute Konturtreue des Polsterteils erhalten bleibt, was unerlässlich beim Beziehen mit Textilen, Leder oder Folie der Fall ist.

### Bezugszeichenliste

- 1: Faserverbundwerkstoff
- 2, 3: Einlegematerial
- 4: Vlieslage
- 5: Sitzteil
- 6: Lehnenteil
- 7: Kopfstütze
- 8: Ventilator
- 9: Luftströmung
- 10: Fahrzeugsitz
- 11: Polsterelement
- 12: Formkörper

## Patentansprüche

1. Polsterelement (11), insbesondere ein Sitzpolsterelement oder ein Kopfstützenpolsterelement zur Verwendung in einem Kraftfahrzeug, wobei das Polsterelement (11) eine Vlieslage (4) und einen Faserverbundwerkstoff (1) aufweist, **dadurch gekennzeichnet, dass** zwischen der Vlieslage (4) und dem Faserverbundwerkstoff (1) ein Einlegematerial (2, 3) angeordnet ist, wobei das Einlegematerial (2, 3) gegenüber dem Faserverbundwerkstoff (1) unterschiedliche Kompressionseigenschaften aufweist und wobei der Faserverbundwerkstoff (1) zusammen mit dem Einlegematerial (2, 3) und der Vlieslage (4) einen einstückigen Materialverbund bilden, wobei wenigstens zwei unterschiedliche Einlegematerialien (2, 3) vorgesehen sind, wobei ein erstes Einlegematerial (2) und ein zweites Einlegematerial (3) in unterschiedlichen Oberflächenbereichen des Polsterelements (11) angeordnet sind, wobei die Fasern des Faserverbundwerkstoffs (1) mit einem Bindemittel verbunden sind und wobei das Bindemittel des Faserverbundwerkstoffs (1) das Einlegematerial (2, 3) und die Vlieslage (4) nach einem Aushärtungsschritt fixiert.

2. Polsterelement (11) nach Anspruch 1, **dadurch gekennzeichnet, dass** das Einlegematerial (2, 3) ein Vliesmaterial oder eine Matte ist, wobei das Vliesmaterial oder die Matte natürliche oder synthetische Fasern aufweist.

3. Polsterelement (11) nach einem der vorhergehenden Ansprüche, **dadurch gekennzeichnet, dass** das Einlegematerial (2, 3) lediglich über einen Teilbereich der Oberfläche des Polsterelements (11) erstreckt vorgesehen ist.

4. Polsterelement (11) nach einem der vorhergehenden Ansprüche, **dadurch gekennzeichnet, dass** das Einlegematerial (2, 3) weicher als der Faserverbundwerkstoff (1) ist.

5. Polsterelement (11) nach einem der vorhergehenden Ansprüche, **dadurch gekennzeichnet, dass** das Einlegematerial (2, 3) ein technisch hergestelltes gewebtes oder gesponnenes Vlies ist.

6. Polsterelement (11) nach einem der vorhergehenden Ansprüche, **dadurch gekennzeichnet, dass** das Einlegematerial (2, 3) ein geringeres spezifisches Gewicht aufweist als der Faserverbundwerkstoff (1).

7. Verfahren zur Herstellung eines Polsterelements (11), insbesondere ein Sitzpolsterelement oder ein Kopfstützenpoisterelement zur Verwendung in einem Kraftfahrzeug, nach einem der vorhergehenden Ansprüche, **dadurch gekennzeichnet, dass** ein Einlegematerial (2, 3) umfassendes Vorläufermaterial in einem Formwerkzeug geformt wird, wobei zur Erzeugung des Vorläufermaterials zunächst die Vlieslage (4) in das Formwerkzeug eingebracht wird und anschließend das Einlegematerial (2, 3) sowie Fasern und Bindemittel zur Erzeugung des Faserverbundwerkstoffes (1) in das Formwerkzeug eingebracht wird, wobei die Fasern mit dem Bindemittel verbunden werden und wobei das Bindemittel des Faserverbundwerkstoffes (1) das Einlegematerial (2, 3) und die Vlieslage (4) nach einem Aushärtungsschritt fixiert.

8. Verfahren nach Anspruch 7, **dadurch gekennzeichnet, dass** das Bindemittel ein Latexwerkstoff ist und dass nach der Formung des Polsterelements (11) im Formwerkzeug ein Vulkanisationsschritt erfolgt.

9. Kopfstütze (7), insbesondere für ein Kraftfahrzeug, **dadurch gekennzeichnet, dass** die Kopfstütze (7) ein Polsterelement (11) gemäß einem der Ansprüche 1 bis 7 aufweist.

10. Fahrzeugsitz, insbesondere für ein Kraftfahrzeug, umfassend ein Sitzteil (5) und ein Lehnenteil (6), **dadurch gekennzeichnet, dass** das Sitzteil (5) und/oder das Lehnenteil (6) ein Polsterelement (11) gemäß einem der Ansprüche 1 bis 7 aufweist.

## Claims

1. Cushion element (11), in particular a seat cushion element or a headrest cushion element for use in a motor vehicle, wherein the cushion element (11) has a fleece layer (4) and a fibre-reinforced material (1), **characterised in that** an insert material (2, 3) is arranged between the fleece layer (4) and the fibre-reinforced material (1), wherein the insert material (2, 3) has different compression characteristics from the fibre-reinforced material and wherein the fibre-reinforced material (1) together with the insert material (2, 3) and the fleece layer (4) form a one-piece material combination, wherein at least two different insert materials (2, 3) are provided, wherein a first insert material (2) and a second insert material are arranged in different surface areas of the cushion element (11), wherein the fibres of the fibre-reinforced material (1) are bonded by a bonding means and wherein the bonding means of the fibre-reinforced material (1) fixes the insert material (2, 3) and the fleece material (4) after a curing step.

2. Cushion element (11) in accordance with claim 1, **characterised in that** the insert material (2, 3) is a fleece material or a mat, wherein the fleece material or the mat has natural or synthetic fibres.

3. Cushion element (11) in accordance with one of the preceding claims, **characterised in that** the insert material (2, 3) provided only extends over a part of the area of the surface of the cushion element (1).

4. Cushion element (11) in accordance with one of the preceding claims, **characterised in that** the insert material (2, 3) is softer than the fibre-reinforced material (1).

5. Cushion element (11) in accordance with one of the preceding claims, **characterised in that** the insert material (2, 3) is a technically manufactured woven or spun fleece.

6. Cushion element (11) in accordance with one of the preceding claims, **characterised in that** the insert material (2, 3) has a smaller specific weight than the fibre-reinforced material (1).

7. Method for manufacture of a cushion element (11), in particular a seat cushion element or a headrest cushion element for use in a motor vehicle, in accordance with one of the preceding claims, **characterised in that** a precursor material comprising an insert material (2, 3) is formed in a forming tool, wherein, for production of the precursor material, the fleece layer (4) is first introduced into the forming tool and then the insert material (2, 3) together with fibres and binding means is introduced into the forming tool for production of the fibre-reinforced material (1), wherein the fibres are bonded by the bonding means and wherein the bonding means of the fibre-reinforced material (1) fixes the insert material (2, 3) and the fleece layer (4) after a curing step.

8. Method in accordance with claim 7, **characterised in that** the bonding means is a latex material and that, after the forming of the cushion element (11) in the forming tool, there is a vulcanisation step.

9. Head support (7), in particular for a motor vehicle, **characterised in that** the head support (7) has a cushion element (11) in accordance with claims 1 to 7.

10. Head support, in particular for a motor vehicle, comprising a seat portion (5) and a backrest portion (6), **characterised in that** the seat portion (5) and/or the backrest portion (6) has a cushion element (11) in accordance with one of the claims 1 to 7.

## Revendications

1. Élément de rembourrage(11), notamment de siège ou d'appuie-tête, destiné à un véhicule à moteur. L'élément de rembourrage (11) comporte une couche de non-tissé (4) et un matériau composite renforcé par des fibres (1) **caractérisé par le fait qu'**un matériau de garniture (2, 3) est disposé entre la couche de non-tissé (4) et le matériau composite renforcé par des fibres (1). Par rapport au matériau composite renforcé par des fibres (1), le matériau de garniture (2, 3) présente des propriétés de compression différentes ; le matériau composite renforcé par des fibres (1) formant, avec le matériau de garniture (2, 3) et la couche de non-tissé (4), un matériau composite ; deux matériaux de garniture (2, 3) étant prévus, un premier matériau de garniture (2) et un deuxième matériau de garniture (3) étant placés à des niveaux différents de la surface de l'élément de rembourrage (11), les fibres du matériau composite renforcé (1) étant liées avec un agent liant ;l'agent liant du matériau composite renforcé (1) fixant le matériau de garniture (2, 3) et la couche de non-tissé (4) après une étape de durcissement.

2. Élément de rembourrage (11) selon la revendication 1 **caractérisé par le fait que** le matériau de garniture (2, 3) est un matériau non-tissé ou une natte présentant des fibres naturelles ou synthétiques.

3. Élément de rembourrage (11) selon l'une des revendications précédentes, **caractérisé par le fait que** le matériau de garniture (2, 3) n'est prévu d'être étiré que sur une partie de la surface de l'élément de rembourrage (11).

4. Élément de rembourrage (11) selon l'une des revendications précédentes, **caractérisé par le fait que** le matériau de garniture (2, 3) est plus souple que le matériau composite renforcé par des fibres.

5. Élément de rembourrage (11) selon l'une des revendications précédentes, **caractérisé par le fait que** le matériau de garniture (2, 3) est un tissu technique tissé ou filé.

6. Élément de rembourrage (11) selon l'une des revendications précédentes, **caractérisé par le fait que** le matériau de garniture (2, 3) possède un poids spécifique moindre que le matériau composite renforcé par des fibres (1).

7. Procédé de fabrication d'un élément de rembourrage (11), en particulier un élément de rembourrage de siège ou d'appuie-tête destiné à un véhicule à moteur, selon l'une des revendications précédentes, **caractérisé par le fait qu'**un matériau de garniture (2, 3) entourant le matériau précurseur est formé dans un moule. Pour réaliser le matériau précurseur, la couche de non-tissé (4) est placée dans le moule avant le matériau de garniture (2, 3) ainsi que des fibres et des liants pour la réalisation du produit de liaison des fibres (1). Les fibres sont mélangées au produit de liaison et le produit de liaison du produit de liaison des fibres (1) fixe ainsi le matériau de garniture (2, 3) et la couche de non-tissé (4) après une étape de durcissement.

8. Procédé selon la revendication 7, **caractérisé par le fait que** le produit de liaison est un matériau contenant du Latex et qu'une étape de vulcanisation a lieu après la mise en forme de l'élément de rembourrage (11).

9. Appuie-tête (7), en particulier pour un véhicule à moteur, **caractérisé par le fait que** l'appuie-tête (7) présente un élément de rembourrage (11) conforme à l'une des prétentions de 1 à 7.

10. Siège de véhicule moteur en particulier, comprenant un siège (5) et un dossier (6), **caractérisé par le fait que** le siège (5) et/ou le dossier (6} comporte(nt) un élément de rembourrage (11), conformément à l'une des prétentions de 1 à 7.
